(19) Europäisches Patentamt
European Patent Office
Office européen des brevets

(11) Publication number: **0 028 764**
**B1**

(12) **EUROPEAN PATENT SPECIFICATION**

(45) Date of publication of patent specification: **09.10.85**

(51) Int. Cl.[4]: **C 08 L 77/00,** G 01 K 7/00

(21) Application number: **80106610.1**

(22) Date of filing: **28.10.80**

(54) **Polymeric thermo-sensitive compositions.**

(30) Priority: **30.10.79 JP 140950/79**
**13.11.79 JP 147298/79**
**25.03.80 JP 38454/80**

(43) Date of publication of application:
**20.05.81 Bulletin 81/20**

(45) Publication of the grant of the patent:
**09.10.85 Bulletin 85/41**

(84) Designated Contracting States:
**DE FR GB**

(56) References cited:
**AU-A- 476 187**
**GB-A-1 352 381**
**US-A-2 630 421**
**US-A-3 640 948**
**US-A-3 649 595**
**US-A-3 904 705**

(73) Proprietor: **Matsushita Electric Industrial Co., Ltd.**
**1006, Oaza Kadoma**
**Kadoma-shi Osaka-fu, 571 (JP)**

(72) Inventor: **Hotta, Shu**
**5-2-301, Myokenzaka Katano-shi**
**Osaka-fu (JP)**
Inventor: **Kishimoto, Yoshio**
**15-11, Kitamachi Nasuzukuri**
**Hirakata-shi Osaka-fu (JP)**
Inventor: **Shimotsuma, Wataru**
**12-8, Yamatedai 5-chome Ibaraki-shi**
**Osaka-fu (JP)**

(74) Representative: **Eisenführ & Speiser**
**Martinistrasse 24**
**D-2800 Bremen 1 (DE)**

**EP 0 028 764 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a thermo-sensitive material for use in a flexible wire-like temperature detecting wire, which is employed in a temperature detecting apparatus for regulating the temperature of a heating element such as electric blanket, electric carpet or the like.

Conventionally, as polymeric thermo-sensitive materials for achieving the above-described object, polymeric compositions were often used, the compositions having a small amount of material, which gives ionic conductivity such as interfacial activator or the like, added to flexible resin such as soft polyvinyl chloride or the like. However, since the conductive carriers of these compositions were ionic materials, polarization was caused upon application of direct-current electric field, with the result that the polymeric compositions could not be used as the thermo-sensitive material for a heat-sensing heater as described later.

Also, as disclosed in the Japanese Patent Laid-Open Publications Nos. 4597/1976 and 116495/1978, polyamide compositions are proposed, which are improved in temperature detecting function due to addition of a compound larger in dielectric constant change to the temperature. However, these compositions are improved in temperature detecting function, but any consideration is not given to the direct-current polarization. Thiourea derivative such as thiobarbituric acid which was usually used for this purpose, is a material which is easier to be ion-dissociated in the polyamide, and the polyamide compositions containing these thiourea derivative compounds cause a polarization phenomenon in the application of the direct-current electric field, thereby to cause large time-passage-change in impedance. Accordingly, these compositions are not suitable for use in thermo-sensitive materials as described later.

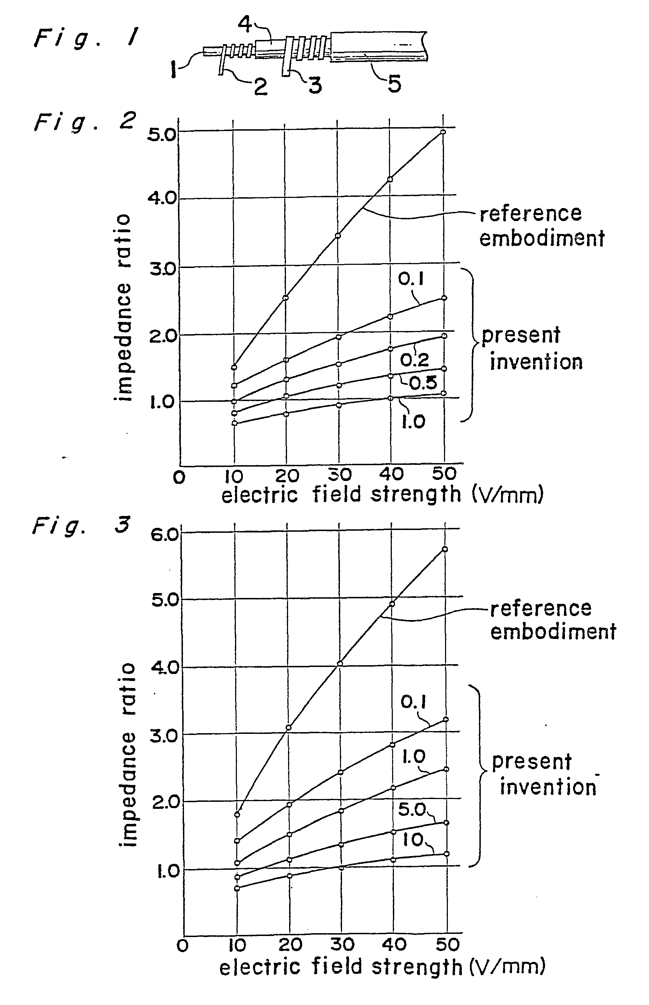

The general construction of the temperature detecting heater is formed of a wire as shown within Fig. 1. In Fig. 1, an inner-side detecting strand 2 wound around a heat-proof core 1, which functions as a heater, receives signals to be transmitted between an outer-side detecting strand 3 and the inner-side detecting strand 2. A polymeric thermo-sensitive material 4 is interposed between the outer-side detecting strand 2 and the inner-side detecting strand 3, and a housing 5 is provided to cover the outer-side detecting strand 3. Direct currents or half-wave rectification waves are applied to the heater from the outside power source (not shown in the drawing) in a known manner so that the heater is energized and heated by means of the electric current. The temperature of the heater is detected through application of the alternating-current voltage between the outer-side detecting strand 2 and the inner-side detecting strand 3 to obtain temperature signals.

In fact, if such ion conductivity material as described hereinabove is used as the thermo-sensitive material for the temperature detecting heater, the polarization phenomenon is caused through the application of the direct-current electric field thereon, which is adapted to energize and heat the heater, and the resistance value thereof changes as the time for the application passes, whereby the ion conductivity material cannot certainly be used as the thermo-sensitive material for the temperature detecting heater.

Therefore, as shown in the Japanese Patent Laid-Open Publication No. 12692/1976, phosphoric acid, boric acid, phosphorous or boron compound is added to try to prevent the polarization phenomenon of the thermo-sensitive material. However, since they are superior in hygroscopicity, the polyamide composition with these compounds added thereto is considerable in impedance decrease under high humidity so that the polyamide composition has a great difficulty in practical use for the temperature detecting heater.

As the similar example, the Japanese Patent Publication No. 42314/1976 discloses a composition, which is improved in humidity proof through blending of hydroxy-phenyl-group-introduced phosphoric acid ester with the polyamide. However, such a polyamide composition with phosphorus, boron compound or phosphoric acid ester in the above-described both compositions blended therein is completely spoiled in bending and flexibility, which are required as a thermo-sensitive material after it has been left in high-temperature air.

The object of the present invention is to provide a polymeric thermo-sensitive material to be used for the temperature detecting heater, which is free from the above disadvantages inherent to the conventional, and which is smaller in polarization and hygroscopicity, higher in temperature detecting function, and not deteriorated in flexibility through thermal deterioration.

Another important object of the present invention is to provide a thermo-sensitive material of a polyamide composition containing sulphur-contained compound or phosphorous acid ester therein, thereby to obtain such characters as described hereinabove.

Accordingly, a polymeric thermo-sensitive material of the present invention is composed of a polyamide composition containing 0.1 to 10 parts by weight of at least one type of sulphur-containing compound or phosphorous acid ester, the one type of sulphur-containing compound being selected from a group composed of bis(hydroxyphenyl)sulfide, mercaptothiazole and their derivatives, and thiophosphorous acid ester.

These and other objects, features and aspects of the present invention will become more apparent from the following detailed description of the present invention when taken in conjunction with the accompanying drawings.

Fig. 1 is a development view showing a temperature detecting heater for the purpose of illustrating the construction thereof as mentioned above;

Figs. 2 and 3 are graphs showing the relationship between the impressed electric-field strength and

impedance ratio of a temperature detecting heater with polyamides as thermo-sensitive materials, of the present invention, respectively, the polyamides being different in the containing amount of thiophosphorous acid ester or bis(hydroxyphenyl)sulfide.

First of all, it is to be noted that a polyamide composition containing the said sulphur-containing compound or phosphorous acid ester therein is employed as a polymeric thermo-sensitive material of the present invention.

The following are enumerated as effective sulphur containing compounds.

(1) Bis(hydroxyphenyl)sulfide and its derivative

(2) Melcaptothiazole and its derivatives

(3) Thiophosphorous acid esters

In the above compounds, thiophosphorous acid ester show general terms for compounds to be defined by the following formulas, wherein $Z_1$ through $Z_3$ show sulphur atoms or oxygen atoms, containing at least one phosphorous-sulphur combination in the molecule, and $R_1$ through $R_4$ are of hydrocarbon group which means alkyl group, phenyl group or alkyl substituted phenyl group and the carbons of the alkyl group are 1 through 27 in number.

(1) Compounds shown by a formula of

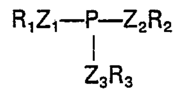

(wherein $R_1$ through $R_3$ are of hydrocarbon group and one of them may be hydrogen atom); such as tris(phenylthio)phosphite, bis(phenylthio)mono-decylphosphite, bis(laurylthio)hydrogenphosphite or the like.

(2) Compounds combined by a bonding chain including carbon atoms wherein a group of the compounds shown by a formula of

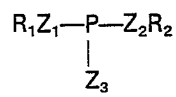

(wherein $R_1$, $R_2$ each are of a hydrocarbon group, showing a case where nothing is bonded with the hydrocarbon group or the oxygen atom with one extra bonding hand); such as tetrakis(phenylthio)-dipropyleneglycoldiphosphite,

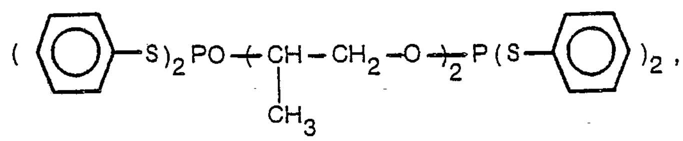

tetrakis[mono(phenylthio)mono(tridecylthio)phosphinooxymethyl]methane,

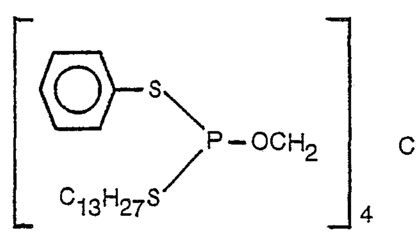

or the like.

(3) A polymer shown by a formula of

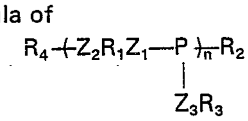

(wherein $R_1$ through $R_4$ are of a hydrocarbon group, n being a natural number); such as water-added thiobisphenol A phosphite polymer,

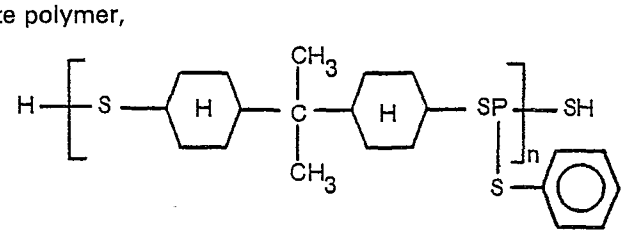

or the like.

It has been found out that particularly the following compounds provide extremely advantageous effects for the thermo-sensitive materials.

bis(2-methyl-4-hydroxy-5-t-butylphenyl)sulfide,

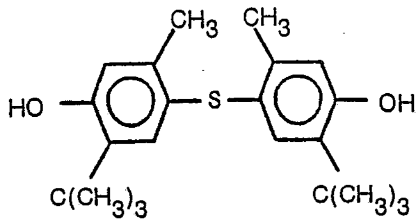

,

bis(2-hydroxy-3-t-butyl-5-methylphenyl)sulfide,

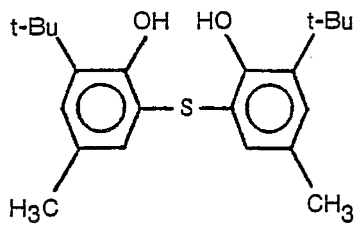

,

bis[2-methyl-4-alkylthioalkyloyloxy-5-t-butylphenyl]sulfide,

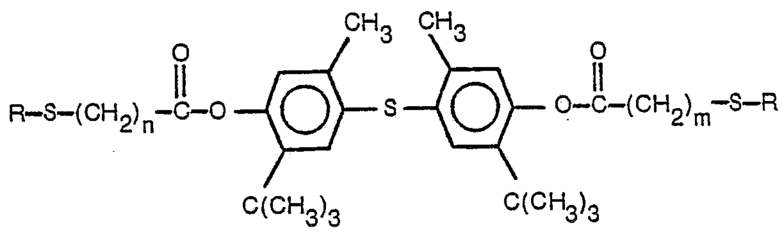

(wherein m and n show 2 through 8, respectively, and R shows alkyl group of 1 through 27 in number of carbons),

2-mercaptobenzothiazole, trialkyltrithiophosphite,

$(RS)_3P$

(wherein R shows alkyl group of 1 through 27 in the number of carbons).

It is to be noted here that the blending amount of these sulphur containing compounds provide better results when 0.1 through 10 by weight part is provided with respect to the polyamide 100 by weight part. When 0.1 or less by weight part is provided, sufficient polarization proof or higher temperature detecting function cannot be provided, while, when 10 or more by weight part is provided, the flexibility of the composition is undesirably spoiled. Also, since the thiophosphorous acid ester has an effect of preventing the flexibility deterioration which is caused due to the heating, the use of the thiophosphorous acid ester is particularly effective in achieving the object of the present invention.

On the other hand, the phosphorous acid ester show general terms for compounds to be defined by the following formulas.

(1) Compounds shown by a general formula of $(RO)_3P$

(2) Phosphorous acid ester wherein a group shown by a general formula of

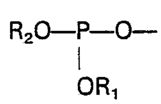

and is bonded by carbon atoms or a bonding chain containing the carbon atoms.

(3) Polymer of a shape shown by a general formula of

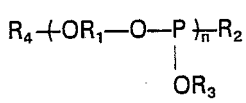

(4) Compounds shown by a general formula of

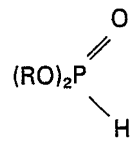

In the above formulas, R, $R_1$ through $R_4$ are of a hydrocarbon group.

In the above compounds, followings are enumerated as the embodiment of the phosphorous acid ester of each of the groups.

(1) Triphenylphosphite, tris(2-ethylhexyl)phosphite

(2) Tetraphenyldipropyleneglycoldiphosphite,

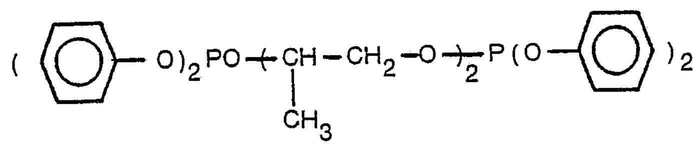
,

tetraphenyltetra(tridecyl)pentaerythritoltetra phosphite

(3) Water-added bisphenol A phosphite polymer,

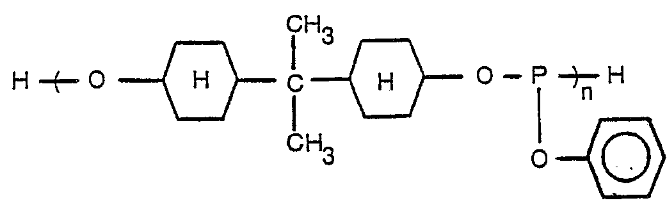

(4) Diphenylhydrogenphosphite, dilaurylhydrogenphosphite

In the above compounds of the phosphorous acid ester, each of them has good characters in superior polarization proof, heat deterioration proof and humidity proof. It is to be noted here that the blended amount of the phosphorous acid ester or the like provides superior results when 0.1 through 10 by weight part is provided with respect to polyamide 100 by weight part. When the 0.1 or less by weight part is provided, sufficient polarization proof, humidity proof, temperature detecting function or heat deterioration proof cannot be provided, while, when 10 or more by weight part is provided, the sufficient mutual solubility is undesirably spoiled with respect to the polyamide. Also, it is needless to say that plasticizer, bulking agent, compounding agent for providing thermistor characteristics, or the like, which is generally used in the polyamide can be properly blended with respect to these compositions. In addition, it has been found out that a composition, containing at least one type from among the bis(hydroxyphenyl)sulfides or their derivatives, and at least one type from among the thiophosphorous acid esters, as the polymeric thermo-sensitive material of the present invention is superior in polarization proof and heat deterioration proof as compared with material excluding any agent of the above types in the respective single use. In fact, the joint use of the addition agents of these types is generally performed widely to prevent the plastic from being oxidized, and many examples of the composition wherein geometrical operation is recognized on the prevention of mechanical characteristic-deterioration are reported up to the present.

Also, it has been found that so-called hindered phenol among the bis(hydroxyphenyl)sulfides is extremely effective particularly against the deterioration. As this form of hindered phenol, bis(2-methyl-4-hydroxy-5-t-butylphenyl)sulfide or bis(2-hydroxy-3-t-butyl-5-methylphenyl)sulfide or the like are enumerated.

In the above hindered phenol, the hindered form means a substance having a large group such as t-butyl group introduced to at least one from among the ortho positions of the hydroxy group.

According to the desirable using method in a case where such a form of hindered phenol as described hereinabove is used as the bis(hydroxyphenyl)sulfide, the addition amount of the thiophosphorous acid ester is required to be 0.1 through 1.0 part by weight with respect to 100 parts by weight of the polyamide and bis(hydroxyphenyl)sulfide is required to be approximately 1 through 10 by weight part. This is because the phenol series material is generally superior in mutual solubility with respect to the polyamide composition and a lot of amount of addition thereof can be performed. On the other hand, the thiophosphorous acid ester is slightly inferior in the mutual solubility. In addition to the geometrical function, the phenol series material generally has an effect of improving the humidity proof of the polyamide composition, so that the above-described method for using the hindered phenol is recommendable. Accordingly, at least one compound from among the thiophosphorous acid ester and the bis(hydroxyphenyl)sulfide is increased in addition amount to provide superior results for the thermo-sensitive materials. The composition to be achieved can be provided, in accordance with the grades of the polarization proof and heat-deterioration proof, through the proper increase and decrease of these compounds, and thus obtained composition is extremely superior in polarization proof and heat-resistance proof, because sulphur atoms contained commonly in the molecules of compounds which constitute thiophosphorous ester or bis(hydroxyphenyl)sulfide seem to perform the specific mutual operations with respect to each other.

Furthermore, a base polymer which becomes the matrix of the thermo-sensitive material used in the present invention is effective for the general polyamide composition of all kinds. Among them, polyundecanamide or polydodecanamide, or copolymer polyamide composed of the polyundecanamide and polydodecanamide is smaller in hygroscopicity and also smaller in electric resistance value change or impedance value change, which is caused due to the hygroscopicity. Thus, these compositions can be used to provide polymeric thermo-sensitive material which is superior particularly in moisture proof.

The present invention will be described hereinafter in detail with reference to various embodiments.

*Embodiment 1*

Bis(2-methyl-4-hydroxy-5-t-butylphenyl)sulfide 10 by weight part is dry-blended with polydodecanamide powder 100 by weight part and is dried for 24 hours in a thermostatic device of 100°C. Thereafter, it is extruded into gut shape by an extrusion molding machine and pelleted with a cutter. After the pellets have been dried, they are worked by an extruding machine for manufacturing wires into a temperature detecting heater as shown in Fig. 1.

*Embodiment 2*

Bis(2-methyl-4-(3-dodecylthiopropionyloxy)-5-t-butylphenyl)sulfide

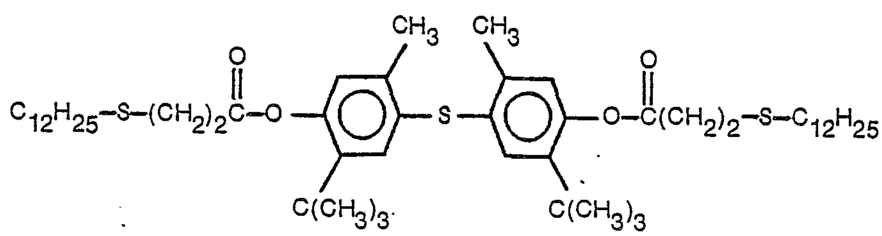

2 by weight part is blended with polydodecanamide powder 100 by weight part to provide a temperature detecting heater in the same manner of embodiment 1.

*Embodiment 3*

2-mercaptobenzothiazole 10 by weight part is blended with polydodecanamide powder 100 by weight part to provide a temperature detecting heater in the same manner of embodiment 1.

*Embodiment 4*

Tris(laurylthio)phosphite $(C_{12}H_{25}S)_3P$ 1 by weight part is blended with polydodecanamide powder 100 by weight part to provide a temperature detecting heater in the same manner of embodiment 1.

Comparison example to be referred to embodiments 1 to 4

Polydodecanamide only is used to provide a temperature detecting heater in the same manner of the embodiments 1 to 4.

Comparisons, in characteristics, between the thermo-sensitive materials in each embodiment 1 to 4 and comparison example are shown in the following table I.

In the table I, the thermistor B constant means the thermistor B constant of impedance at 30°C through 60°C and the heat proof is shown in impedance (measured value at 120°C) ratio after and before the direct current electric field application of 300 hour 5 V/mm at 120°C.

Table I

| | Impedance (Ω·cm) at room temperature | Thermistor B constant (°K) | Heat proof |
|---|---|---|---|
| Embodiment 1 | $6.3\times10^9$ | 3,200 | 1.4 |
| Embodiment 2 | $6.4\times10^9$ | 3,100 | 1.4 |
| Embodiment 3 | $5.0\times10^9$ | 3,400 | 1.6 |
| Embodiment 4 | $6.2\times10^9$ | 3,000 | 1.2 |
| Comparison example | $6.2\times10^9$ | 2,100 | 3.2 |

As apparent from these results, it is found out that the thermo-sensitive materials of the present invention is superior in polarization proof and temperature detecting function in comparison with single substance of polydodecanamide, i.e., in numeral value of thermistor B constant.

Therefore, it is made clear that the polymeric thermo-sensitive material, having sulphur-contained compound therein, of the present invention has a property superior in electric characteristics.

The effect of the phosphorous acid ester will be described hereinafter with reference to embodiments 5 to 7.

*Embodiment 5*

Tris(2-ethylhexyl)phosphite 0.5 by weight part is added to polydodecanamide powder 100 by weight part. It is extruded into gut shape by an extrusion molding machine and thereafter is pelleted. After the pellets have been dried, they are worked by an extruding machine for manufacturing wires into a temperature detecting heater as shown in Fig. 1.

*Embodiment 6*

Tetraphenyldipropyleneglycoldiphosphite 2 by weight part is blended with polydodecanamide powder 100 by weight part to provide a temperature detecting heater in the same manner as that of embodiment 5.

*Embodiment 7*

Dilaurylhydrogenphosphite 0.1 by weight part is added to polydodecanamide powder 100 by weight part to provide a temperature detecting heater in the same manner as that of embodiment 5.

Comparison example 1 to be referred to embodiments 5 to 7

Phosphoric acid 1 by weight part is blended with polydodecanamide powder 100 by weight part to provide a temperature detecting heater in the same manner as that of the embodiment 5.

Comparison example 2

Tris(p-hydroxyphenyl)phosphate 10 by weight part is blended with polydodecanamide powder 100 by weight part to provide a temperature detecting heater in the same manner as that of embodiment 5.

Comparison example 3

Polydodecanamide only is used to provide a temperature detecting heater in the same manner as that of embodiment 5.

The comparison, in characteristics, among the thermo-sensitive materials in each of the embodiments 5 to 7 and comparison examples 1 to 3 will be described in the following table II.

Table II

| Sample | Impedance at room temperature (Ω·cm) | Thermistor B constant (°K) | Heat proof | Humidity proof | Bending |
|---|---|---|---|---|---|
| Embodiment 5 | $6.9\times10^9$ | 3,400 | 1.4 | 0.71 | 7,000 |
| Embodiment 6 | $5.8\times10^9$ | 3,100 | 1.7 | 0.63 | 7,500 |
| Embodiment 7 | $6.4\times10^9$ | 3,100 | 1,5 | 0.60 | 6,500 |
| Comparison example 1 | $6.6\times10^9$ | 3,000 | 1.4 | 0.38 | 1,000 |
| Comparison example 2 | $6.2\times10^9$ | 3,200 | 1.9 | 0.67 | 1,500 |
| Comparison example 3 | $6.2\times10^9$ | 2,100 | 3.2 | 0.44 | 2,000 |

In the table II, the humidity proof is represented in impedance ratio, i.e., comparison at room temperature, with respect to the absolute dry condition after 70 hours' stay in the air of 45°C at temperature and 95% in relative humidity, and the bending property is represented in the number of bending leading to the break through 90 degree bending tests after the gut of 2 mm in diameter has stayed for 300 hours in a thermostatic device of 120°C.

As apparent from these results, it is found out that the thermo-sensitive material of the present invention is superior in humidity proof, polarization proof, heat-deterioration proof and temperature detecting function (value of thermistor B constant) as compared with the polydodecanamide only, is greatly improved in humidity proof and heat-deterioration proof as compared with the polydodecanamide composition with phosphoric acid blended therewith, and is considerably improved in heat-deterioration proof as compared with the composition with tris(p-hydroxyphenyl)phosphate blended therewith. Accordingly, it is made apparent that the phosphorous-acid-ester-contained polymeric thermo-sensitive material of the present invention is superior in electric characteristics and mechanical characteristics.

Polymeric thermo-sensitive materials containing thiophosphorous acid ester particularly from among sulphur-contained compounds will be described hereinafter in connection with embodiments. Among them, the specific effect of a composition containing the bis(hydroxyphenyl) sulfide will be described hereinafter with reference to embodiments 9 and 10.

Embodiment 8

Tris(phenylthio)phosphite 0.1 by weight part is added to the polydodecanamide (nylon 12®) 100 by weight part. It is extruded into gut-shape by an extrusion molding machine and thereafter is pelleted. The pellets are dried and are worked by an extruding machine for manufacturing wires into a temperature detecting wire as shown in Fig. 1.

Embodiment 9

Tetrakis(phenylthio)dipropyleneglycoldiphosphite 10 by weight part is added to the polyundecanamide 100 by weight part to provide the temperature detecting wire in the same manner as that of the embodiment 8.

In addition thereto, compounds showing the mutual operation between the thiophosphorous acid ester and the bis(hydroxyphenyl)sulfide will be enumerated hereinafter with reference to embodiments 10 and 11.

Embodiment 10

Bis(laurylthio)hydrogenphosphite 0.5 by weight part and bis(2-hydroxy-3-t-butyl-5-methylphenyl)sulfide 5.0 by weight part are added to polydodecanamide 100 by weight part to provide the temperature detecting wire in the same manner as that of the embodiment 8.

Embodiment 11

Water-added thiobisphenol A phosphite polymer 0.1 by weight part and his (2-methyl-4-hydroxy-5-t-butylphenyl) sulfide 10 by weight part are added to the polyundecanamide 100 by weight part to provide the temperature detecting wire in the same manner as that of the embodiment 8.

Conventional example 1 to be compared with the embodiments 8 and 11

Phosphoric acid 1.0 by weight part is blended with polydodecanamide 100 by weight part to provide a temperature detecting wire in the same manner as that of the embodiment 8.

Conventional example 2

Tris(p-hydroxyphenyl)phosphate 10 by weight part is blended with the polydodecanamide 100 by weight part to provide the temperature detecting wire in the same manner as that of the embodiment 8.

Conventional example 3

Polydodecanamide only is used to provide the temperature detecting wire in the same manner as that of the embodiment 8.

Conventional example 4

Polyundecanamide only is used to provide the temperature detecting wire in the same manner as that of the embodiment 8.

The comparison in characteristics among the thermo-sensitive materials in the above-described embodiments and the thermo-sensitive materials in the conventional examples will be described in the following table III.

TABLE III

| Sample | Thermistor B Constant (°K) | Heat proof | Humidity proof | Bending |
|---|---|---|---|---|
| Embodiment 8 | 2,700 | 2.0 | 0.73 | 7,000 |
| Embodiment 9 | 3,000 | 1.7 | 0.70 | 8,500 |
| Embodiment 10 | 3,700 | 0.9 | 0.85 | 45,000 |
| Embodiment 11 | 3,300 | 1.0 | 0.84 | 30,000 |
| Conventional example 1 | 3,000 | 1.4 | 0.38 | 1,000 |
| Conventional example 2 | 3,200 | 1.9 | 0.67 | 1,500 |
| Conventional example 3 | 2,100 | 3.2 | 0.44 | 2,000 |
| Conventional example 4 | 1,800 | 3.7 | 0.40 | 1,500 |
| Comparison example | 3,400 | 1.5 | 0.80 | 6,000 |

As apparent from the above-described results, it is found out that the polymeric thermo-sensitive material to be used in the thermo-sensitive heaters of the embodiments 8, 9 is superior in polarization proof, heat-deterioration proof and humidity proof as compared with only polydodecanamide (nylon 12®) in the conventional embodiment 3 or only polyundecanamide (nylon 11®) in the conventional embodiment 4. Also, it is found out that the polyamide compositions in the embodiments 8 and 9 are greatly improved in heat-deterioration proof and humidity proof as compared with the conventional example 1 with the phosphoric acid blended and considerably improved in heat-deterioration proof as compared with the composition of the conventional example 2 with the tris(p-hydroxyphenyl)phosphate blended.

In addition, as apparent in the embodiments 10, 11, effects are considerable towards the improvements in polarization proof and heat-deterioration proof in a case where the ratio thiophosphorous acid ester and the bis(hydroxyphenyl)sulfide are jointly used. Among them, as shown in the embodiments 10, 11, the effect of the joint use of the bis(hydroxyphenyl) sulfide and the thiophosphorous acid ester series is extremely superior to completely prevent the increase in impedance value in a case where the direct-current electric field has been applied.

With the above results, it is made clear that the polymeric thermo-sensitive material in the present invention is superior in electric and mechanical characteristics.

Embodiment 12

Bis(2-hydroxy-3-t-butyl-5-methylphenyl)sulfide 5.0 by weight part is added to the polydodecanamide 100 by weight part to obtain a master batch, and, thereafter, tris(phenylthio)phosphites 0.1, 0.2, 0.5, 1.0 by weight part are separately added, respectively, to the master batches to provide the temperature detecting wires in the same manner as that of the embodiment 1. These four types of samples each including trisphosphites of 0.1, 0.2, 0.5, 1.0 are further divided into five groups, and each of them was thrown into a drying machine of 120°C. These direct-current electric fields, which are varied by 10 V/mm from 10 V/mm to 50 V/mm, are applied upon each of the samples for 300 hours, and the impedance ratio before and after the application is calculated. The relationship of the electric field strength and impedance ratio is plotted with the addition amount of the tris(phenylthio)phosphite as parameters within a graph of Fig. 2. In a reference embodiment to be compared with the embodiment 12 the tris(phenylthio)phosphite is not added, and this result is also shown in Fig. 2. In Fig. 2, the numeral values of curve shoulder portions show the addition amounts (hereinafter referred to as phr) of the tris(phenylthio)phosphite with respect to the polydodecanamide 100 by weight amount.

As apparent from Fig. 2, the impedance ratio decreases with increase in the addition amount of the tris(phenylthio)phosphite when the electric field of the same electric field strength is applied. Through the comparison of the embodiment 12 with the reference embodiment, sufficient effect can be recognized even with the addition of the phr 0.1. Also, the optimum composition as a polymeric thermo-sensitive material can be provided through the variation of the addition amount in accordance with the electric field strength to be applied upon these temperature detecting wires of the present invention. For example, as apparent from Fig. 2, the addition amount of the tris(phenylthio)phosphite is required to be 0.1 phr when the polymeric thermo-sensitive material is used through application of 10 V/mm electric field upon the thermo-sensitive material, and the superior results can be realized when the addition amount is, respectively, 0.5, 1.0 phr in the case of 20 V/mm, 40 V/mm through 50 V/mm.

Embodiment 13

Tetrakis[mono(phenylthio)mono(tridecylthio)phosphinooxymethyl]methane 1.0 by weight part is added to the polyundecanamide 100 by weight part to gain a master batch, and, thereafter, bis(2-methyl-4-hydroxy-5-t-butylphenyl)sulfides 0.1, 1.0, 5.0, 10 by weight part are separately added to the master batches to provide the temperature detecting wires in the same manner as that of the embodiment 1. These four types of samples each including bis sulfides 0.1, 1.0, 5.0, 10 are further divided into five groups, and each of them was thrown into a drying machine of 120°C as in the embodiment 12. These direct-current electric fields, which are varied by 10 V/mm from 10 V/mm to 50 V/mm, are applied upon each of the samples for 300 hours, and the impedance ratio before and after the application is calculated. The relationship between the electric field strength and impedance ratio is plotted with the addition amount (phr) of the bis(2-methyl-4-hydroxy-5-t-butylphenyl)sulfide as parameters within a graph of Fig. 3. In a reference embodiment to be compared with the embodiment 13 the bis(2-methyl-4-hydroxy-5-t-butylphenyl)sulfide is not added, and this result is shown in Fig. 3.

As apparent from Fig. 3, the impedance ratio decreases with increase in the addition amount of the bis(2-methyl-4-hydroxy-5-t-butylphenyl)sulfide when the electric field of the same electric field strength is applied. Through the comparison of the embodiment 13 with the reference embodiment, sufficient effect can be recognized even with the addition of the phr 0.1. Also, the optimum composition as a polymeric thermo-sensitive material can be provided through the variation in the addition amount in accordance with the electric field strength to be applied upon these temperature detecting wires of the present invention, as same as that of the embodiment 12. For example, as apparent from Fig. 3, the superior results can be realized if the strengths of the electric fields to be added to the polymeric thermosensitive material are, respectively, 10 V/mm, 15 V/mm and 30 V/mm when the addition amounts of the bis(2-methyl-4-hydroxy-5-t-butylphenyl)sulfide are, respectively, 1.0, 5.0 and 10 phr.

The above description with respect to the embodiments 12 and 13 means that the polymeric thermosensitive material which is most suitable for the heater can be easily provided through increase and decrease in the addition amount of thiophosphorous acid ester (or bis(hydroxyphenyl)sulfide) in accordance with the strength of the electric field to be applied to the polymeric thermo-sensitive material or the required degree of the heat resistance when the temperature detecting wires shown in the embodiments 12, 13 are provided in the heater such as electric blanket, electric carpet or the like.

As apparent from the above embodiments 1 through 13, the polymeric thermo-sensitive material in the present invention is not only superior in electric and mechanical characteristics, but also is wider in use as the thermo-sensitive material.

Although the present invention has been fully described by way of various embodiments with reference to the attached drawings, it is to be noted that various changes and modifications are apparent to those skilled in the art. Therefore, unless otherwise such changes and modifications depart from the scope of the present invention, they should be construed as included therein.

**Claims**

1. Polymeric thermosensitive composition containing 0.1 to 10 parts by weight of at least one of following compounds: bis(hydroxyphenyl)sulfide, mercaptothiazole and their derivatives,

thiophosphorous acid ester and phosphorous acid ester blended with 100 parts by weight polyamide.

2. Polymeric thermosensitive composition according to claim 1, wherein said polyamide is polyundecanamide or polydodecanamine, or copolymer polyamide composed of polyundecanamide or polydodecanamide.

3. Polymeric thermosensitive composition according to claim 1, wherein bis(hydroxyphenyl)sulfide or its derivative is bis(2-methyl-4-hydroxy-5-t-butylphenyl) sulfide or bis(2-hydroxy-3-t-butyl-5-methylphenyl)sulfide or bis[2-methyl-4-(alkylthioalkyloyloxy)-5-t-butylphenyl]sulfide.

4. Polymeric thermosensitive composition according to claim 1, wherein mercaptothiazole is 2-mercaptobenzothiazole.

5. Polymeric thermosensitive composition according to claim 1, wherein thiophosphorous acid ester is trialkyltrithiophosphite.

6. Polymeric thermosensitive composition according to claim 1 or 2, wherein said polyamide composition contains at least one type from bis (hydroxyphenyl)sulfide or its derivative and at least one type from thiophosphorous acid ester.

7. Use of a polymeric thermosensitive composition according to claims 1—6 in a temperature detecting device for regulating the temperature of a heating element, such as electric blanket or electric carpet.

**Patentansprüche**

1. Polymere, wärmeempfindliche Zusammensetzung enthaltend 0,1 bis 10 Gewichtsteile mindestens einer der folgenden Verbindungen: Bis-(hydroxylphenyl)-sulfid, Mercaptothiazol und ihre Derivate, Thiophosphorigsäureester und Phosphorigsäureester, im Gemisch mit 100 Gewichsteilen Polyamid.

2. Polymere, wärmeempfindliche Zusammensetzung nach Anspruch 1, worin das Polyamid ein Polyundecanamid oder Polydodecanamid, oder ein copolymeres Polyamid aus Polyundecanamid oder Polydodecanamid ist.

3. Polymere, wärmeempfindliche Zusammensetzung nach Anspruch 1, worin das Bis-(hydroxyphenyl)-sulfid oder ein Derivat davon Bis-(2-methyl-4-hydroxy-5-t-butylphenyl)-sulfid, Bis-(2-hydroxy-3-6-butyl-5-methylphenyl)-sulfid oder Bis-[2-methyl-4-(alkyl-thioalkyloyloxy)-5-t-butylphenyl]-sulfid ist.

4. Polymere, wärmeempfindliche Zusammensetzung nach Anspruch 1, worin das Mercaptothiazol 2-Mercaptobenzothiazol ist.

5. Polymere, wärmeempfindliche Zusammensetzung nach Anspruch 1, worin der Thiophosphigsäureester ein Trialkyltrithiophosphit ist.

6. Polymere, wärmeempfindliche Zusammensetzung nach Anspruch 1 oder 2, worin das Polyamid mindestens ein Bis-(hydroxphenyl)-sulfid oder eines seiner Derivate und mindestens einen Thiophosphigsäureester enthält.

7. Verwendung einer polymeren, wärmeempfindlichen Zusammensetzung nach einem der Ansprüche 1—6 in einen Temperatur angebenden Gerät zur Regulierung der Temperatur eines Heizelements, wie einer elektrischen Heizdecke oder eines elektrischen Teppichs.

**Revendications**

1. Composition polymère thermosensible contenant 0,1 à 10 parties en poids d'au moins un des composés suivants: sulfure de bis(hydroxyphényle), mercaptobenzothiazole et leurs dérivés, ester thiophosphoreux et ester phosphoreux, en mélange avec 100 parties en poids d'un polyamide.

2. Composition polymère thermosensible selon la revendication 1, dans laquelle ledit polyamide est un polyundécanamide ou un polydodécanamide ou un copolyamide composé de polyundécanamide ou de polydodécanamide.

3. Composition polymère thermosensible selon la revendication 1, dans laquelle le sulfure de bis(hydroxyphényle) ou son dérivé est le sulfure de bis(2-méthyl-4-hydroxy-5-tert-butylphényle) ou le sulfure de bis(2-hydroxy-3-tert-butyl-5-méthylphényle) ou le sulfure de bis[2-méthyl-4-(alkylthioalkyloyloxy)-5-tert-butylphényle].

4. Composition polymère thermosensible selon la revendication 1, dans laquelle le mercaptothiazole est le 2-mercaptobenzothiazole.

5. Composition polymère thermosensible selon la revendication 1, dans laquelle l'ester thiophosphoreux est un trithiophosphite de trialkyle.

6. composition polymère thermosensible selon la revendication 1 ou 2, dans laquelle la composition de polyamide contient au moins un composant du type sulfure de bis(hydroxyphényle) ou ses dérivés et au moins un composant du type ester thiophosphoreux.

7. Utilisation d'une composition polymère thermosensible selon les revendications 1 à 6 dans un dispositif détecteur de température pour la régulation de la température d'un élément chauffant tel qu'une couverture électrique ou un tapis électrique.

Fig. 1

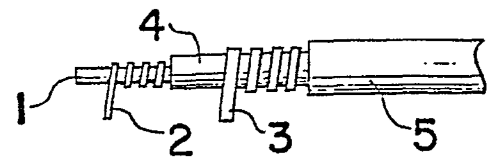


Fig. 2

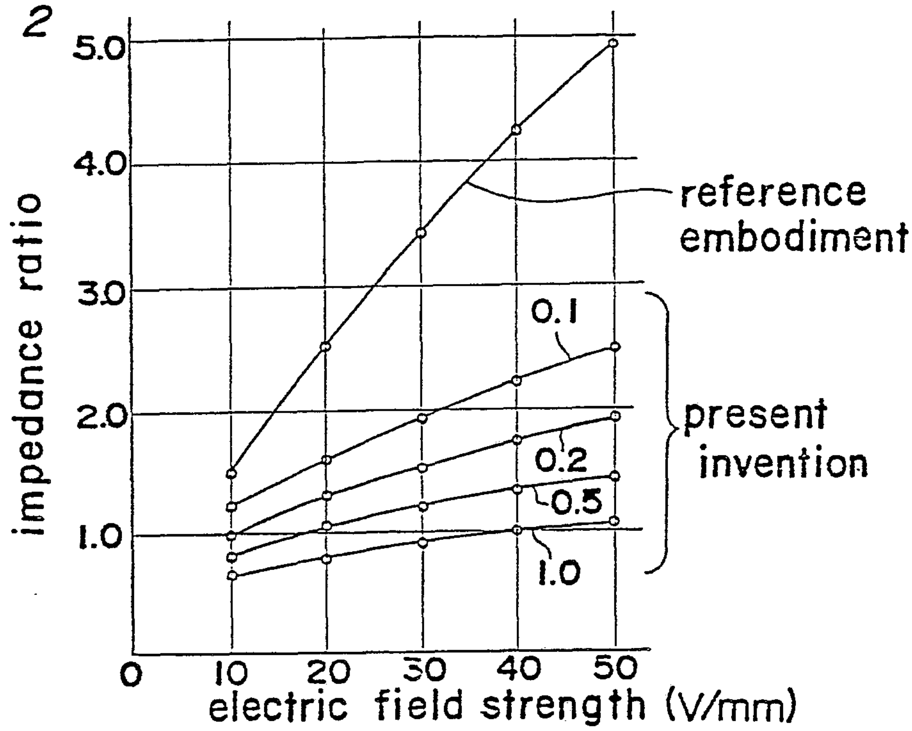


Fig. 3